(19) Europäisches Patentamt
European Patent Office
Office européen des brevets

(11) Publication number: **0 402 072 A2**

# (12) EUROPEAN PATENT APPLICATION

(21) Application number: **90306044.0**

(51) Int. Cl.⁵: **D04H 1/64**

(22) Date of filing: **04.06.90**

(30) Priority: **05.06.89 US 361388**

(43) Date of publication of application: **12.12.90 Bulletin 90/50**

(84) Designated Contracting States: **AT BE CH DE DK ES FR GB GR IT LI LU NL SE**

(71) Applicant: **SEQUA CHEMICALS INC.**
**One Sequa Drive**
**Chester South Carolina(US)**

(72) Inventor: **North, Bernard**
**624 Plainfield Road**
**Rock Hill, South Carolina(US)**

(74) Representative: **Lawrence, Peter Robin Broughton et al**
**GILL JENNINGS & EVERY 53-64 Chancery Lane**
**London WC2A 1HN(GB)**

## (54) Binder for non-woven fibres.

(57) A non-formaldehyde binder for non-woven fibre or fabrics is prepared which comprises an emulsion polymer containing a crosslinking agent, a glyoxal resin and catalyst.

EP 0 402 072 A2

## BINDER FOR NON WOVEN FIBRES

This invention relates to binders for non-woven fibres or fabrics. More particularly it relates to a non-formaldehyde binder system for non-wovens which utilises a glyoxal resin.

Non-woven fabrics cover a wide array of products including consumer goods like mattress dust shields, disposable diaper cover fabrics, cleaning towels, carpets, draperies and industrial and commercial goods like wipe cloths, tire cords, conveyor belts, hospital fabrics, etc. The technology for non-woven production includes filament or staple filters processed through a dry or wet-lay sheet formation step and bonded by thermal, mechanical or chemical means. Laminations of non-woven or knitted textiles are often still classified as non-wovens.

One of the non-woven bonding methods is to treat a staple or filament fibre sheet with an emulsion polymer containing a formaldehyde based crosslinking resin in order to impart water and solvent resistance. When the emulsion is dried and cured the polymer forms intimate bonding of the fibres. This polymer deposition modifies the strength, stiffness, environmental resistance, elongation and many other characteristics of the fibre fabric sheet. The fibre can be selected from a great variety of compositions, e.g. rayon, wood pulp (cellulose), cotton, nylon, polyester, glass and graphite. In the case of carded staple fibre the polymer usually contributes most of the strength and toughness character in the resulting non-woven. In wet-laid wood pulp fibre products the polymer is able to provide the non-woven with strength and resistance to aqueous and solvent environments which the untreated non-woven would not have. In glass mat non-wovens traditionally bonded with a urea-formaldehyde resin, addition of emulsion polymers alters the toughness of the resulting non-woven. Even in filament or staple fibre non-wovens which are bonded by mechanical (i.e. needle punching) or thermal (e.g. spun bonded) techniques and are formed into useful non-woven fabrics without a chemical treatment, an additional application of an emulsion polymer can enhance or produce other valuable characteristics such as stretch resistance or non-slip character. For applications requiring increased water or solvent resistance, resins such as melamine-formaldehyde resins have also been added.

Melamine-formaldehyde resins do not build viscosity in the binder until cured, but they have the disadvantage of having an unpleasant odour and of releasing free formaldehyde. Curing with such resins involves the crosslinking of the binder molecule with the methylol or methylated methylol group of the melamine resin. Free formaldehyde can be released either directly from the binder or mixture, or when the coating is cured on the drying machine. The presence of even less than one percent of free formaldehyde, based on the total weight of the product, is undesirable, not only because of its objectionable odour, but because it is an allergen and an irritant, causing severe reactions in the operators who manufacture the binders who treat and handle the non-woven fibres or fabrics.

Glyoxal is a highly reactive monomer which cures quickly and has excellent crosslinking properties. As a result of this rapid crosslinking of glyoxal and binder, however, the viscosity of the binder increases so rapidly and is so great that the composition cannot be used. Gelling can occur in moderate or low solids formulations if the binder is not used promptly. Thus in situations where it is required that the viscosity remain stable for many hours, for example when high-solids binders are to be applied, a glyoxal system is unsuitable.

According to the present invention a binder suitable for non-woven fibres or fabrics is provided comprising an emulsion polymer, a crosslinking agent and a resin characterised in that the resin is a glyoxal resin, the binder is substantially free of formaldehyde, and comprises a catalyst.

This binder is applied to a non-woven fibre or fabric, dried and cured to obtain a bound fibre or fabric.

The glyoxal condensation product inhibits the glyoxal from reacting with the other components of the binder prior to curing. Inhibiting the reactivity of the glyoxal allows a product to be formulated at higher solids and/or lower viscosity than otherwise possible with glyoxal. During the curing process the glyoxal reacts with the polymer, latent crosslinking agent and non-woven fibre or fabric resulting in a crosslinked bound fibre with superior strength. Using this invention, it is possible to prepare a binder with a high level of emulsion polymer. With free glyoxal, the coating additive can be unstable resulting in thickening or gelling of the binder, or the coating may show unacceptably high viscosity or gelling over time.

The glyoxal resin may be prepared by reaction with suitable components including urea, substituted ureas (such as dimethyl urea), various cyclic ureas such as ethylene urea, substituted ethylene ureas (such as 4,5-dihydroxyethylene urea), propylene urea, substituted propylene ureas (such as 4-hydroxy-5-methylpropylene urea) and carbamates (such as isopropyl or methyl carbamate). Preferably the component is a urea or cyclic urea because the glyoxal resins formed are very stable providing long shelf life.

The reaction of the glyoxal and preferably a urea or cyclic urea, generally takes place within the

temperature range of about 25°C to 100°C, preferably about 40°C to 80°C. In general the pH of the reactants and resultant binder additive is about 2.5 to 8.0 and preferably is about 4 to 6.5. Preferably the ratio of glyoxal: urea is within the range of about 0.5-2:1, optimally about 1:1. Generally the glyoxal resin is present in the binder at a level of about 1-25% preferably 2 to 10%, by weight of the polymer solids.

The urea reactant may be urea, monourein or the like. If a cyclic urea is selected it may have one of the following general formulas:

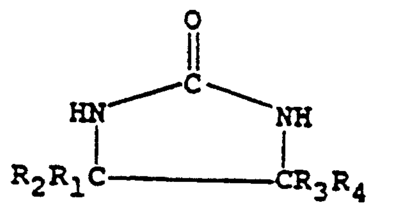
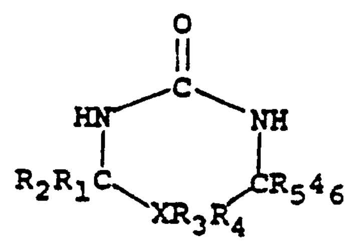

wherein $R_1$, $R_2$, $R_3$, $R_4$, $R_5$, and $R_6$ may be the same or different and each may be H, OH, COOH, R, OR, or COOR wherein R is an alkyl or a substituted alkyl group having 1 to 4 carbon atoms and X may be C, O, or N; when X is O, $R_3$ and $R_4$ are each zero; when X is N, $R_3$ or $R_4$ is zero.

Typical examples of such urea reactant compounds include, but are not limited to ethylene urea, propylene urea, uron, tetrahydro-5(2-hydroxyethyl)-1,3,5-triazin-2-one, 4,5-dihydroxy-2-imidazolidinone, 4,5-dimethyoxy-2-imidazolidinone, 4-methyl ethylene urea, 4-ethyl ethylene urea, 4-hydroxyethyl ethylene urea, 4,5-dimethyl ethylene urea, 4-hydroxy-5-methyl propylene urea, 4-methoxy-5-methyl propylene urea, 4-hydroxy-5, 5-dimethyl propylene urea, 4-methoxy-5, 5-dimethyl propylene urea, tetrahydro-5-(ethyl)-1,3,5-triazin-2-one, tetrahydro-5-(propyl)-1,3,5-triazin-2-one, tetrahydro-5-(butyl)-1,3,5-triazin-2-one, 4-hydroxy-5,5-dimethyl-pyrimid-2-one, and the like and mixtures thereof. Monoureide may also be used.

The glyoxal/urea condensates may also be partially or wholly alkylated, e.g. by reacting the condensate with an alcohol such as methanol, ethanol, n-propanol, butanol and the like and their mixtures. Alternatively, the glyoxal can be reacted with an alkylated urea or alkylated cyclic urea.

A variety of emulsion polymers can be used in the binder to treat non-wovens. The polymer emulsion can be based on: acrylate and methacrylate ester copolymers; styrene-acrylate ester copolymers; styrene-butadiene copolymers; acrylonitrile copolymers of the above; vinylacetate polymers; vinylacetate-acrylate ester polymers; vinylacetate-ethylene copolymers; vinyl chloride polymers; vinyl chloride-ethylene copolymers and vinyl chloride-acrylate ester copolymers. All the above emulsion polymers can be used in non-woven fabrics based primarily on the particular characteristics which the polymer can contribute to the non-woven. Particular examples include (1) the use of an acrylate ester copolymer to bond polyester staple fibre for quilt stuffing and insulation; (2) the use of a vinylacetate-ethylene copolymer to give wet strength to wood pulp non-wovens used as paper towels; (3) the use of a vinylchloride based polymer to bond staple polyester fibres for flame retardant filter media; and (4) the use of a styrene-butadiene copolymer to bond high denier nylon fibres, for extra tough floor polishing fabrics.

The emulsion polymer of the binder contains a crosslinking agent and preferably contains a latent crosslinking agent. By the term "latent crosslinking agent" is meant a polyfunctional monomer wherein a portion of the functionality enters into the polymerisation with other monomers in the polymer emulsion, with the residual functionality causing crosslinking of the polymer upon the subsequent application of energy by applying heat, i.e. by drying and curing of the binder. The latent crosslinking agent provides theromosetting characteristics to the polymer emulsion. Upon the subsequent application of energy the latent crosslinking agent forms an insoluble crosslinking network, with the corsslinking being triggered generally by heat or radiation after the polymer emulsion has been formed and applied. Examples of latent crosslinking agents are: N-alkylolamides of alpha, beta ethylenically unsaturated carboxylic acids having 3-10 carbons, such as N-methylol acrylamide, N-ethanol acrylamide, N-propanol acrylamide, N-methylol methacrylamide, N-ethanol methacrylamide, N-methylol maleamide, N-methylol maleamic acid, N-methyl maleamic acid esters; the N-alkyl a amides of the vinyl aromatic acids, such as N-methylol-p-vinylbenzamide and the like; also N-(alkoxymethyl) acrylates and methacrylates, where the alkyl group has from 1-8 carbon atoms, such as N-(methoxymethyl) acrylamide, N-(butyoxymethyl) acrylamide, N-(methoxymethyl) methacrylamide, N-(butoxymethyl) allyl carbamate and N-(methoxymethyl) allyl carbamate, and mixtures of these monomers with allyl carbamate, acrylamide or methacrylamide. Generally the latent crosslinking agent is added to the bonder at a level of .05% to 10%, preferably 2 to 6% by weight of the polymer solids.

A catalyst is added to the binder to promote the reaction of the crosslinking agent in the polymer and

the reaction of the glyoxal resin with the polymer. Generally the catalyst is added to the binder at a level of .02% to 10%, preferably .05% to 5% by weight of the polymer solids. Suitable catalysts include: ammonium salts such as ammonium chloride, ammonium sulphate, ammonium phosphate and ammonium nitrate; amine salts such as $NR_1R_2R_3$-X wherein $R_1$, $R_2$ and $R_3$ are H, lower alkyl ($C_1$-$C_5$) or hydroxalkyl such as $C_2H_4OH$ or $C_3H_6OH$ and X is chloride, sulphate, phosphate or nitrate; organic acids such as citric acid, malic acid, maleic acid, methane sulphonic acid, toluene sulfonic acid or partially neutralised salts thereof; inorganic acids such as sulphuric acid, hydrochloric acid, phosphoric acid or partially neutralised salts thereof; and metal salts such as magnesium chloride, magnesium sulphate, zinc, chloride, zinc nitrate, zinc fluorborate, aluminum sulphate, aluminum chloride or aluminum hydroxychloride. Preferred catalysts include aluminum chloride, ammonium chloride, magnesium chloride and toluene sulphonic acid.

According to the present invention a process suitable for binding non-woven fibres or fabrics is provided comprising applying a binder at a level of from 5-40%, preferably 10-30% by weight of fibre, and drying and curing to bind the fibre characterised in that the binder as described above is used.

The binder is applied by conventional means then dried and cured to activate the binder. Various fibres can be bound with an appropriate emulsion polymer being selected therefore. The types of fibres include cellulosic, polyester and polyethylene fibres.

The following examples serve to illustrate the present invention:

## Example 1

A glyoxal resin comprising a cyclic urea/glyoxal condensate was prepared as follows. A 40% aqueous glyoxal (290g; 2 mole) was charged to a 1 liter flask and urea (120g; 2 mole) was dissolved in the glyoxal solution. The pH was adjusted to 6.5 with 25% caustic soda solution and the stirred reaction mixture was heated to 50-60° C and maintained at pH of 6.0-7.0 for 3 hours. A solution of 4,5 dihydroxy-imidazolidinone was produced. To this solution was added 40% aqueous glyoxal (250g;1.72 mole) and the stirred reaction mixture was heated at pH 6.0-7.0 at 50-60° C for 3 hours to effect addition of the glyoxal. The mixture was adjusted to pH 3.0 and held for 4 hours at 50-60° C to effect condensation of the adduct. Subsequently the mixture was cooled, the pH was adjusted to 6.3 and the solids adjusted to approximately 45%. A clear yellow aqueous solution of cyclic dihydroxy urea adduct with glyoxal with a non-volatile solids of 44.3% was obtained.

## Example 2

Several compositions were applied to a paper substrate using TAPPI Useful Method 656 and evaluated for tensile strength both dry and wet with water. Styrene/butadiene (SB) latex of 45% solids was prepared with a solids composition of:

| | |
|---|---|
| Styrene | 42% |
| Butadiene | 50% |
| Maleic anhydride | 1.6% |
| n-Methylol Acrylamide | 1.0% |
| Surface active agents | 5.0% |

Sample 1 was the SB latex as control with addition of 1% (by weight based on polymer solids) of an ammonium chloride catalyst. Sample 2 was the SB latex with addition of 3.5% (by weight based on polymer solids) of a methylated tetrahydroxy-methyl melamine and 1% of an ammonium chloride catalyst. Sample 3 was the SB latex with addition of 3.5% of the glyoxal resin of Example 1 together with 1% of an ammonium chloride catalyst. Sample 4 was the SB latex with addition of 7.0% of the glyoxal resin of Example 1 together with 1.5% of an ammonium chloride catalyst. The samples were padded onto paper substrate and add on was adjusted to 20% solids. Padded samples were air dried and then cured at 300° F for the times indicated in Table 1 with the wet and dry tensile strengths as measured on an Instron Model 1130 with the following results:

TABLE 1

| | 30 Seconds | | 60 Seconds | | 4 Minutes | |
|---|---|---|---|---|---|---|
| Sample | Dry Tensile | Wet Tensile | Dry Tensile | Wet Tensile | Dry Tensile | Wet Tensile |
| | (Kg) | (Kg) | (Kg) | (Kg) | (Kg) | (Kg) |
| 1 | 8.38 | 4.37 | 8.81 | 4.59 | 8.35 | 4.37 |
| 2 | 8.47 | 4.96 | 8.78 | 5.38 | 9.27 | 5.62 |
| 3 | 8.82 | 4.94 | 8.88 | 5.11 | 9.12 | 5.35 |
| 4 | 8.26 | 4.53 | 8.86 | 5.15 | 8.82 | 5.73 |

Results show significant improvement in wet tensile strength achieved by Samples 3 and 4 by the addition of a glyoxal resin over Sample 1 and results comparable with Sample 2 in which a melamine crosslinker was added, together with the advantage of the glyoxal resin not containing formaldehyde unlike the melamine products.

## Claims

1. A binder suitable for non-woven fibres or fabrics comprising an emulsion polymer, a crosslinking agent for the polymer and a resin, characterised in that the resin is a glyoxal resin, the binder is substantially free of formaldehyde, and comprises a catalyst.

2. A binder according to claim 1 wherein the glyoxal resin is present in an amount from 1 to 25%, preferably 2 to 10% by weight of polymer solids, and the catalyst is present in an amount from 0.02 t 10%, preferably 0.05 to 5% by weight of polymer solids.

3. A binder according to claim 1 or claim 2 wherein the glyoxal resin is a urea/glyoxal condensate or a cyclic urea/glyoxal condensate.

4. A binder according to any preceding claim wherein the ratio of glyoxal:urea or cyclic urea is in the range 0.5 to 2:1, and preferably is 1:1.

5. A binder according to any preceding claim wherein the urea or cyclic urea/glyoxal condensate is alkylated.

6. A binder according to any preceding claim wherein the catalyst is selected from ammonium chloride, aluminum chloride, magnesium chloride and toluene sulphonic acid.

7. A binder according to any preceding claim wherein the emulsion polymer is selected from the group consisting of acrylate and methacrylate ester copolymers; styrene-acrylate ester copolymers; sytrene-butadiene copolymers; acrylonitrile copolymers of the above; vinyl acetate polymers; vinylacetate-acrylate ester polymers; vinylacetate-ethylene copolymers; vinyl chloride polymers; vinyl chloride ethylene copolymers; and vinyl chloride-acrylate ester copolymers; and is preferably a styrene-butadiene copolymer.

8. A binder according to any preceding claim wherein the crosslinking agent is a latent crosslinking agent.

9. A process suitable for binding a non-woven fibre or fabric comprising applying a binder at a level of 5 to 40%, preferably 10 to 30% by dry weight of the fibre or fabric, drying and curing to bind the fibre or fabric characterised in that the binder defined in any of the preceding claims is used.

10. A process according to claim 9 wherein the fibre is selected from the group comprising cellulosic fibres, polyester fibres and polyethylene fibres.

11. A process according to claim 9 or claim 10 wherein the fibre is in the form of a paper towel.